# EUROPEAN PATENT SPECIFICATION

(11) **EP 1 049 272 B1**
(45) Date of publication and mention of the grant of the patent: **28.06.2006**
(21) Application number: 00109235.2
(22) Date of filing: 28.04.2000
(51) Int. Cl.: H04B 10/08, H04J 3/14, H04J 3/08

(54) **Signal quality monitoring system and method**
System und Verfahren zur Signalqualitätsüberwachung
Système et méthode de contrôle de la qualité d'un signal

(30) Priority: 28.04.1999 JP 12201299
(43) Date of publication of application: 02.11.2000
(73) Proprietor: NEC CORPORATION, Tokyo (JP)
(72) Inventor: Shiragaki, Tatsuya, c/o NEC Corporation, Tokyo (JP); Sasaki, Shinobu, c/o NEC Corporation, Tokyo (JP); Nakamura, Shinya, c/o NEC Corporation, Tokyo (JP); Yamazaki, Takashi, c/o NEC Corporation, Tokyo (JP)
(74) Representative: Betten & Resch

(56) References cited:
- EP-A- 0 804 001
- EP-A- 0 853 394
- WO-A-97/01907
- FR-A- 2 721 464
- US-A- 4 633 464
- US-A- 5 151 902

## Description

The present invention relates to a performance monitoring system and method in an optical communication network.

With the recent vast increase in data transmission capacity, the wavelength division multiplexing (WDM) technique has been widely employed in optical communication networks. Hereafter, a path or an optical path is defined as a line between terminating elements (clients of the network), in which a per-wavelength signal 1s not changed in contents. Therefore, an optical communication network is composed of a plurality of optical paths, each of which is defined by two nodes which are a sending end and a receiving end, respectively. Such a network is also called "lightwave network".

As a conventional method for monitoring an optical path, there has been proposed a method for monitoring the error ratio on incoming signal by executing the parity error check of standardized overhead information which is provided in a transport frame in a synchronous network such as SONET (Synchronous Optical NETwork) or SDH (Synchronous Digital Hierarchy). For example, see "NNI configuration in WDM optical path transport network" by Okamoto (Society Conference of Institute of Electronics, Information and Communication Engineers, 1997, B-10-98).

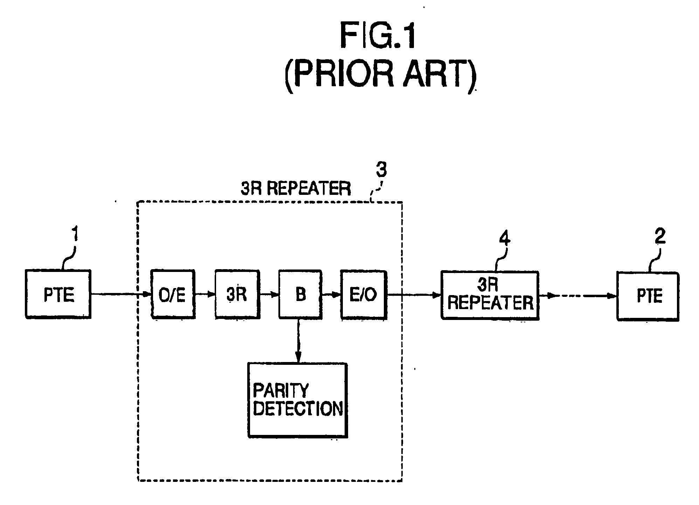

As shown in Fig. 1, it is assumed for simplicity that a lightwave network is composed of an optical path between path terminating elements 1 and 2, which includes a plurality of 3R repeaters (here, only two 3R repeaters 3 and 4 are shown). A 3R repeater has a 3R circuit that performs Reshape, Retiming, and Regeneration operations. Further, it is assumed that a byte of Path Overhead used to monitor the error rate is denoted by B3'.

In the 3R repeater 3 or 4, a branch circuit denoted by B branches an incoming signal into a primary signal to be transmitted and another signal to be monitored. The B3' byte of the to-be-monitored signal is used to obtain the bit error rate of the incoming signal. More specifically, at the sending node (PTE 1), parity has been written in the B3' byte. At the receiving node (PTE 2), parity is computed from the incoming signal and is compared with the parity written in the B3' byte thereof at the sending node. By counting the number of bit errors for a unit of time, the bit error rate (BER) is obtained.

However, such a conventional monitoring method has the following disadvantages.

In the lightwave network where bit error rates on the order of 10⁻¹⁰ are required, when the BER detected at the 3R repeater 3 is 10⁻¹⁰ and the respective BERs detected at the 3R repeater 4 and the PTE 2 are 0.5, it is determined that a failure has occurred between the 3R repeaters 3 and 4. In other words, when the PTE 2 determines whether a failure has occurred between the 3R repeaters 3 and 4, both BERs detected at the 3R repeaters 3 and 4 must be fetched and compared. This causes the configuration of logic circuit for identify the location of a failure to be complicated. Further, it needs the time between requesting and receiving the BER data from both 3R repeaters 3 and 4. Furthermore, the bandwidth for such a communication is needed.

In Japanese Patent Application Unexamined Publication No. 5-292083, an alarm transfer method using an optical amplifier repeater has been disclosed. In this alarm transfer method, a monitor control signal at each repeater is wavelength-multiplexed with a primary signal. The monitor control signal has a frame structure having a predetermined area assigned to each repeater. When the occurrence of a failure has been detected at a repeater, the repeater generates a monitor control signal having the type of the failure and the own identification number therein and transmits it to the network. In this conventional method. the bandwidth for transmitting such a monitor control signal is needed.

US 5,151,902 is a method for quality monitoring of at least two series connected transmission sections in a digital signal transmission link, wherein error message bites in which parity errors are accumulated are transmitted in the section overhead of synchronous transport modules as special bytes for the accumulation of parity errors in successive transmission sections.

FR-A2-721464 describes a method of a parity control and correction of a communication connection, in particular of the synchronous digital hierarchy type wherein the difference between the parity control results of the signal slots of different channels are continuously calculated.

US 4,633,464 describes a control signaling arrangement for a pulse transmission system wherein control signals are transmitted from an end terminal to a repeater by inserting the control signals in periodically spaced bit positions of the block parity channel. At the repeater the control signals are separated from the block parity channel for controlling the circuits or devices for maintenance operations.

EP-A-0853394 describes a method and apparatus for monitoring a failure of an optical signal wherein a calculation circuit calculates an optical S/N ratio of a power of the optical signal to another power of a spontaneous emission light of a different wavelength which is different from the signal wavelength.

From EP-A-084001 a self healing network is known comprising an APS byte transmitter/receiver for exchanging information on failures with adjacent transmission equipment through a protection line, a monitor for monitoring anomalies on a plurality of the working lines, a network table for storing data indicating network structure and a processing unit for determining working lines to be switched based on the data stored in the network table and for processing APS bytes.

WO97/01907 describes a self healing network comprising at least three nodes, which are interconnected by transmission links carrying traffic to and from the nodes. The transmission links are divided into a working ring and a protection ring which transmit traffic in opposite directions. A node is able to detect when an error occurs in the intermediate surrounding, transmission links, or the node. Each node can by itself divert traffic from the working ring to the protection ring and/or by itself divert traffic from the protection ring to the working ring.

It is an object of the present invention to provide a signal monitoring method and system, which can rapidly identify the location of a failure.

It is another object of the present invention to provide a signal monitoring method an system, which can achieve rapid failure restoration.

It is still another object of the present invention to provide a signal monitoring method and system, which can reduce a communication bandwidth for identifying the location of a failure.

According to the present invention, a method for monitoring signal transmission quality in a network according to claim 1 and a method for monitoring signal transmission quality in a path of a network according to claim 6 are provided.

According to a further aspect of the present invention an optical element device according to claim 8 and a system for monitoring signal transmission quality in a path of a network according to claim 13 are provided.

As described above, according to the present invention, signal transmission quality is detected at each element for a corresponding section of a path. Therefore, by accessing only one element, the location of occurrence of a failure can be identified. Therefore, the time required for specifying the fault location is reduced, resulting in rapid fault restoration.

In contrast, according to the prior art, the location of occurrence of a failure cannot be identified without accessing at least two repeaters terminating the section in which the failure occurs.
FIG. 1 is a diagram showing an example of a lightwave network for explaining a conventional performance monitoring method;
FIG. 2 is a schematic diagram illustrating a functional configuration of a signal quality monitoring system according to an embodiment of the present invention;
FIG. 3 is a diagram showing a format of an optical signal used in the embodiment of the present invention;
FIG. 4 is a block diagram illustrating an example of a 3R repeater in the performance monitoring system according to the embodiment of the present invention;
FIG. 5 is a block diagram illustrating another example of a 3R repeater in the performance monitoring system according to the embodiment of the present invention
FIG. 6 is a block diagram illustrating a path terminating element in the sending side of the performance monitoring system according to the embodiment of the present invention; and
FIG. 7 is a block diagram illustrating a path terminating element in the receiving side of the performance monitoring system according to the embodiment of the present invention.

A signal quality monitoring system according to a first embodiment of the present invention will be described.

### OUTLINE OF SYSTEM

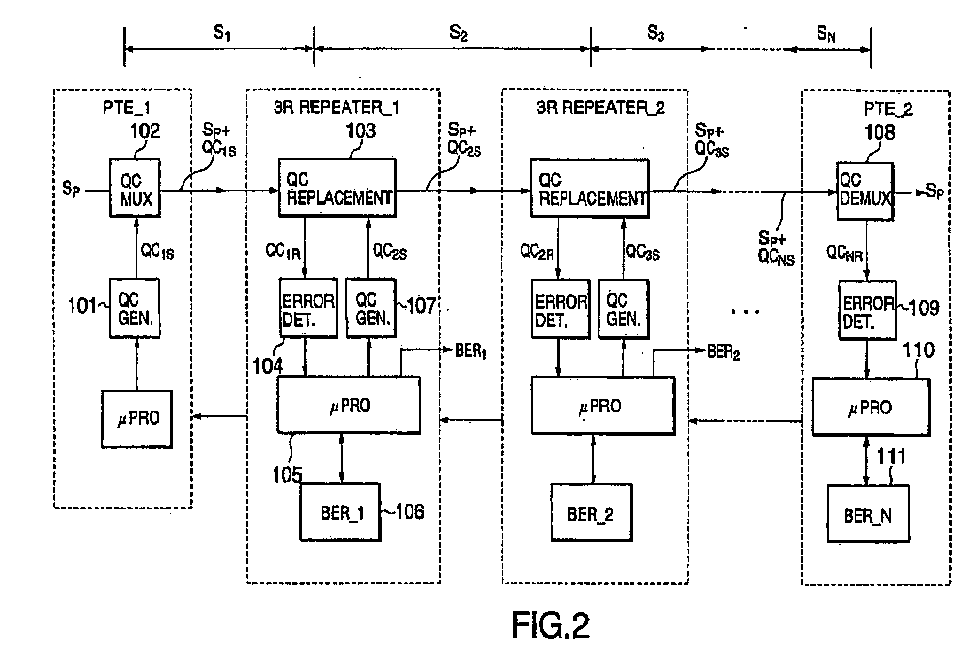

As shown in Fig. 2. it is assumed for simplicity that a lightwave network is composed of path terminating elements PTE_1 and PTE_2 and a plurality of 3R repeaters which are connected through optical transmission lines in series between the path terminating elements PTE_1 and PTE_2. In this lightwave network, the section between the path terminating element PTE_1 and a first 3R repeater_1 is denoted by S₁, the section between the first 3R repeater_1 and the second 3R repeater_2 is denoted by S₂, and so on. It should be noted that Fig. 2 shows only a WDM communication network for one direction from the upstream PTE_1 to the downstream PTE_2. Needless to say, the present invention is applicable to a bidirectional WDM communication network.

The path terminating element PTE_1 includes a quality check Information (QC) generator 101 and a QC multiplexer 102. The QC generator 101 computes quality check information QC_{1S} such as parity bits from a primary signal S_{P} to be transmitted. The quality check information QC_{1S} is written into a transport management byte area of the primary signal S_{P} (that is, time-multiplexed) by the QC multiplexer 102, and the QC-included signal, S_{P} + QC_{1S}, is sent to the following element (the first 3R repeater_1). The quality check information stored in the transport management byte area is terminated at each of 3R repeaters.

When receiving a QC-included primary signal from the path terminating element PTE_1, the first 3R repeater_1 performs the 3R signal processing and then replacement of the received QC_{1R} included in the received primary signal with a newly computed quality check information QC_{2S} by a QC replacement section 103. More specifically, the received QC_{1R} is extracted from the received primary signal. An error detector 104 calculates a bit error rate (BER_1) from the received QC_{1R} and the received primary signal and the detected BER_1 is stored in a memory 106 under control of a processor 105. Therefore, the detected BER_1 indicates the transmission quality of the section S₁. At a request of another element, the processor 105 can send the stored BER_1 to the other element.

Further, the processor 105 instructs a QC generator 107 to compute the quality check information QC_{2S} from the primary signal to be sent. The QC replacement section 103 writes the computed quality check information QC_{2S} into the transport management byte area of the primary signal S_{P} (that is, time-multiplexed), and the QC-included signal, S_{P} + QC_{2S}, is sent to the following element (the second 3R repeater_2).

In the second 3R repeater_2, the BER detection and QC replacement processing as described above are performed. Therefore, the detected BER_2 indicating the transmission quality of the section S₂ is stored in the memory. Then the newly computed quality check information QC_{3S} is written into the predetermined byte area of the primary signal S_{P} (that is, time-multiplexed), and the QC-included signal, S_{P} + QC_{3S}, is sent to the following 3R repeater.

In this manner, each of the 3R repeaters, when receiving a primary signal from the preceding element, performs 3R signal processing, BER detection and QC replacement processing. As a result, a detected BER indicating the transmission quality of a corresponding section is stored in the memory of each 3R repeater. The newly computed quality check information QC is written into the predetermined byte area of the primary signal, and the QC-included signal is sent to the following element.

The path terminating element PTE_2, when receiving a primary signal from the preceding 3R repeater_(N-1), performs 3R signal processing and BER detection. That is, the primary signal is demultiplexed by a QC demultiplaxer 108 and outputs a received quality check information QC_{MR} to an error detector 109. The detected BER_N indicating the transmission quality of the section S_{N} is stored in the memory 111 under control of a processor 110.

The path terminating element PTE_2 checks the path monitoring control byte area of the received primary signal to determine whether the optical path normally operates. If the optical path is impaired, the processor 110 of the path terminating element PTE_2 accesses the memory 111 thereof to check the BER_N. When the BER_N is lower than a required quality, it is determined that a failure occurs in the optical line of the section S_{N}.

If the BER_N is not lower than the required quality, the processor 110 of the path terminating element PTE_2 sequentially accesses the 3R repeaters in the direction opposite to the travel of the primary signal to request the BER detected at each 3R repeater. For example, in the case where the BER_2 detected by the 3R repeater_2 is lower than the required quality, it is determined that a failure occurs in the optical line of the section S₂. In other words, by accessing only one repeater, the location of occurrence of a failure can be identified.

In contrast, according to the prior art, the location of occurrence of a failure cannot be identified without accessing at least two repeaters terminating the section in which the failure occurs.

The quality check information QC is not limited to error detection code such as parity bit. The wavelength data of a transmission lightwave used to carry a primary signal is written as the quality check information QC into the transport management byte area. At a receiving repeater, the wavelength of actually received lightwave is compared with the wavelength data written in the received primary signal to determined whether the transmission line normally operates.

### SIGNAL FORMAT

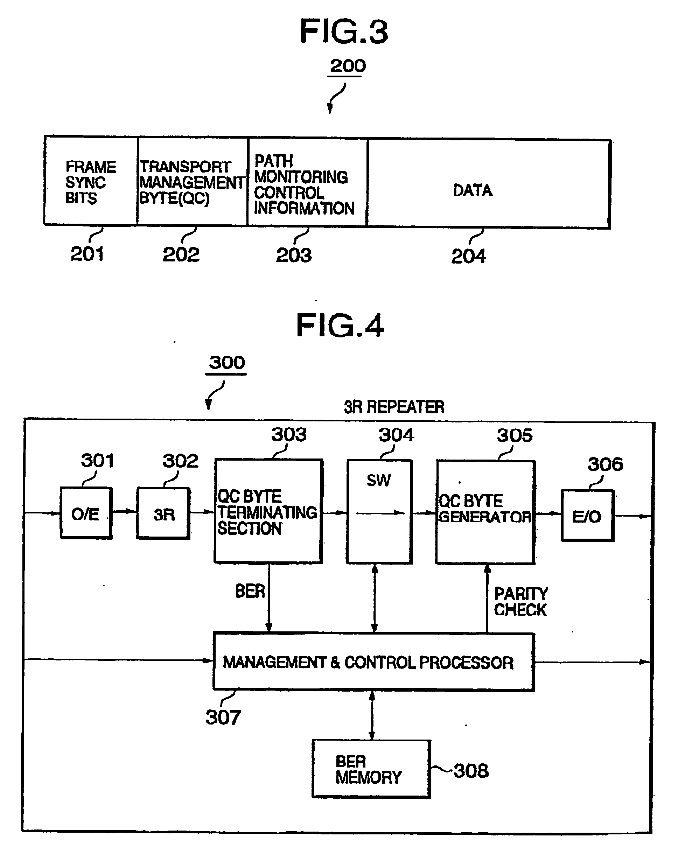

Referring to Fig. 3, an optical signal 200 transmitted at each wavelength is composed of an overhead for control and management and a payload for storing data. The overhead includes a frame synchronization bit pattern field 201 as the first byte, a transport management byte field 202 as the second byte, and a path monitoring control information field 203 as the third byte, which is followed by data field (payload) 204. The transport management byte field 202 stores parity bits which are used to compute a bit error rate (BER) in a corresponding section from the preceding element to the element itself. The path monitoring control information field 203 stores parity bits that are used to compute a BER in the optical path from the PTE_1 to the PTE_2. The details about a method for calculating the error bit count and the bit error rate (BER) from received parity bits are described in Bellcore document GR-253-CORE, Issue 2, December 1995.

The signal format is not limited to that shown in Fig. 3. In the synchronous system such as SDH or SONET, the predetermined overhead byte may be used as the transport management byte and path monitoring control information.

### REPEATER

Referring to Fig. 4, each of the 3R repeaters has the same circuit configuration. A 3R repeater 300 is composed of an input converter (O/E) 301, a 3R circuit 302, a QC byte terminating section 303, a switch 304, a QC byte generator 305, an output converter (E/O) 306, a management and control processor 307, and a memory 308. The input converter (O/E) 301 converts an output electric signal to an output optical signal. A 3R circuit 302 performs clock recovery from the input electric signal and regeneration of data bits according to the recovered clock. Further, the 3R circuit 302 performs frame synchronization by detecting the frame sync bits of an input signal as shown in Fig. 3.

The 3R circuit 302 is not always provided at the position following the O/E 301 end followed by the QC byte terminating section 303. More specifically, in the case where each circuit block is formed with digital LSI, its output is either 1 or 0. In other words, the digital LSI inherently has Reshape and Regeneration (2R) functions. Therefore, by clock recovery and supplying the recovered clock to the following digital LSI blocks, the 3R functions including the Retiming can be achieved by all digital LSIs of the 3R repeater 300. That is, the 3R circuit 302 is not restricted to a specific position in the 3R repeater 300 but the same function can be realized by all the digital LSIs therein.

The QC byte terminating section 303 extracts the transport management (QC) byte 202 from the input signal 200 and performs BER calculation. More specifically, the QC byte terminating section 303 compares the extracted QC byte (here, parity bits) with the parity bits computed from the input signal and counts the number of bit errors to compute the BER. The computed BER is stored in the memory 308 under control of the management and control processor 307.

The switch 304 is fixed to connect an input port to an output of the QC byte terminating section 303 is transferred as it is to the QC byte generator 305.

The QC byte generator 305 computes parity bits from the input signal received from the QC byte terminating section 303 through the switch 304 and writes the computed parity bits as QC byte into the transport management byte field 202 of the signal 200 under control of the management and control processor 307.

The output of the QC byte generator 305 is converted into an optical signal by the E/O 306 and thereafter is wavelength-multiplexed with other signals to be transmitted to the following element.

The management and control processor 307 is provided with a communication means (not shown) allowing data communication with other repeaters or elements. When receiving a request for the detected BER from a path terminating element, the management and control processor 307 reads the BER from the memory 308 and writes it into the payload of a response signal. The response signal carrying the BER is transmitted to the path terminating element. As described before, the BER indicates the signal quality of the input optical signal travelling through the corresponding section of the optical transmission line.

The communication means of the management and control processor 307 may use a wavelength other than the primary signal. Alternatively, time multiplexing may be used.

### REPEATER WITH A SWITCH

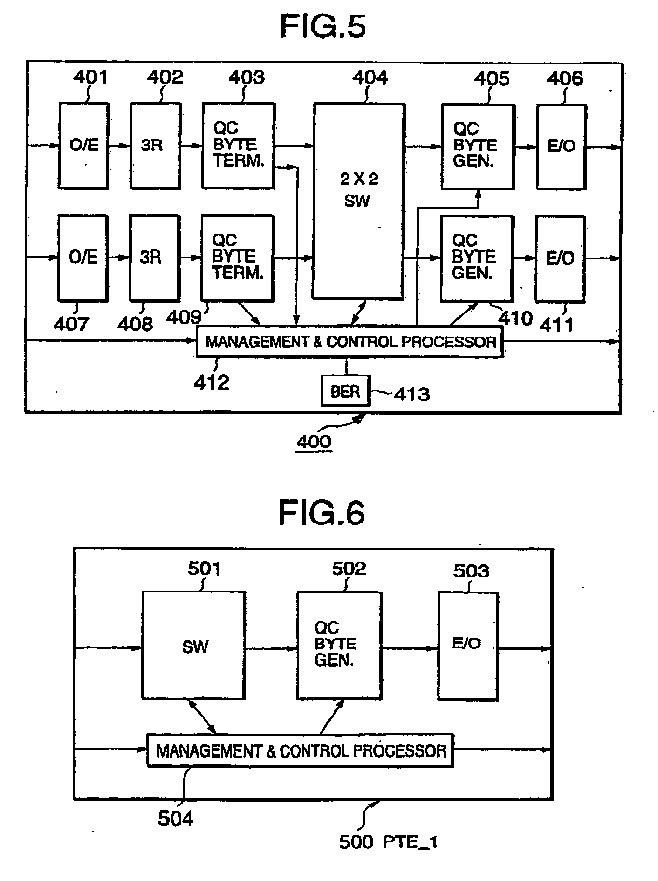

Referring to Fig. 5, a repeater 400 has two inputs and two outputs, allowing interconnections to be switched depending on whether a failure occurs. The repeater 400 may have one-directional line and the opposite-directional line. More specifically, the repeater 400 is composed of input converters (O/E) 401 and 407, 3R circuits 402 and 405, QC byte terminating sections 403 and 409, a 2 x 2 switch 404. QC byte generators 405 and 410, output converters (E/O) 406 and 411, a management and control processor 412, and a memory 413.

The functions other than the 2 x 2 switch 404 are similar to those of circuit blocks as shown in Fig. 4. Each of the QC byte terminating sections 403 and 409 extracts QC byte from the transport management byte field of a corresponding input signal and performs BER calculation. The respective BERs calculated by the QC byte terminating sections 403 and 409 are stored in the memory 413 under control of the management and control processor 412. As in the case of the repeater, when receiving a request from a path terminating element, the stored BERs can be transmitted back to the path terminating element.

The 2 x 2 switch 404 is switched under control of the management and control processor 412 in case of occurrence of a failure. For example, in the case where the path terminating element determines that a failure has occurred in the section of the repeater 400 as described before, the path terminating element instructs the repeater 400 to control the 2 x 2 switch 404 to make an alternative path in order to avoid the impaired transmission section.

A switch used in the repeater is not limited to the 2 x 2 switch 404. Needless to say, a N x N switch can be used.

### PATH TERMINATING ELEMENT

Referring to Fig. 6, the path terminating element 500 (PTE_1) which serves as a starting point of the path is provided with a switch 501, a QC byte generator 502, an output converter (E/O) 503, and a network management and control processor 504. A plurality of sets of QC byte generator 502 and output converter (E/O) 503 may be provided for each path.

The QC byte generator 502 computes parity bits from a transmission signal received through the switch 501 and writes the computed parity bits into the transport management byte field 202 and the path monitoring control information field 203 of the signal 200 (see Fig. 3) under control of the network management and control processor 504.

The output of the QC byte generator 502 is converted into an optical signal by the E/O 503 and thereafter is wavelength-multiplexed with other optical signals to be transmitted to the following element.

The network management and control processor 504 is provided with a communication means (not shown) allowing data communication with other repeaters or elements. For example, the management and control processor 504 sends a request for the detected BER from each element such as a 3R repeater so as to manage the corresponding optical path of the network. As described before, the BER received from a 3R repeater indicates the transmission quality of a section connected to the 3R repeater. The communication means of the management and control processor 307 may use a wavelength other than the primary signal. Alternatively, time multiplexing may be used.

The path terminating element may serve as a network management system, which is included in or connected to the path terminating element. The network management system may be provided in another network node.

The switch 501 may be connected to one of more network. In the case where the path terminating element 500 has fault restoration function, the switch 501 is switched under control of the network management and control processor 504 in case of occurrence of a failure. For example, in the case where it is determined that a failure has occurred in a section in the path, the path terminating element 500 control the switch 501 to make an alternative path in cooperation with the opposite path terminating element PTE_2 in order to avoid the impaired transmission section.

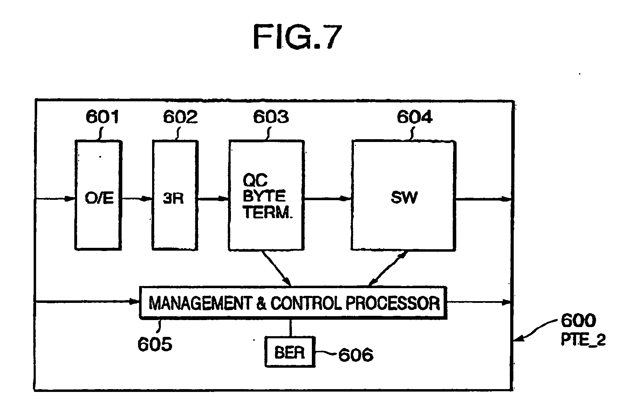

Referring to Fig. 7, the path terminating element 600 (PTE_2) which serves as a terminating point of the path is provided with an input converter (O/E) 601, a 3R circuit 602, a QC byte terminating section 603, a switch 604, a network management and control processor 605, and a memory 606. A plurality of sets of input converter (O/E) 601, 3R circuit 602, and QC byte terminating section 603 may be provided for each path.

The QC byte terminating sections 603 extracts QC information from the transport management byte field 202 and the path monitoring control information field 203 of an input signal 200 and performs BER calculation. The BER for the transport management calculated by the QC byte terminating section 603 is stored in the memory 606 under control of the network management and control processor 605.

The network management and control processor 605 is provided with a communication means (not shown) allowing data communication with other repeaters or elements. For example, the network management and control processor 605 sends a request for the detected BER from each element such as a 3R repeater so as to manage the corresponding optical path of the network. As described before, the BER received from a 3R repeater indicates the transmission quality of a section connected to the 3R repeater. The communication means of the management and control processor 307 may use a wavelength other than the primary signal. Alternatively, time multiplexing may be used.

The path terminating element may serve as a network management system, which is included in or connected to the path terminating element. The network management system may be provided in another network node.

The switch 604 may be connected to one of more network. In the case where the path terminating element 600 has fault restoration function, the switch 604 is switched under control of the network management and control processor 605 in case of occurrence of a failure. For example, in the case where it is determined that a failure has occurred in a section in the path, the path terminating element 600 control the switch 604 to make an alternative path in cooperation with the opposite path terminating element 500 in order to avoid the impaired transmission section

As described above, according to the present invention, the location of occurrence of a failure can be identified by accessing only one repeater. Therefore, the time required for specifying the fault location is reduced, resulting in rapid fault restoration.

### OTHER QUALITY MONITORING METHODS

In the above-described embodiment, the bit error rate BER is used to monitor the transmission line quality of a corresponding section.

Alternatively, as another embodiment, the power of an input light can be used to monitor the same. The input optical power is easily monitored by detecting the photo current flowing through a photodiode. A combination of BER and optical power detection may be used.

Further, in the case where each section in the path uses different wavelength, each repeater is provided with a wavelength measuring device which measures the wavelength of an input optical signal. Therefore, the transmission line quality can be monitored by determining whether the measured wavelength matches the predetermined wavelength data written in the input optical signal. A combination of BER and wavelength detection may be used.

Furthermore, SNR (Signal-to-Noise Ratio) may be used to monitor the transmission quality. SNR can be obtained by measuring ASE (Amplified Spontaneous Emission) level and an input light level.

As described above, attributes of light such as optical power or wavelength are preferably used to monitor the transmission quality. The reason is that the quality can be monitored without multiplexing the quality check information such as parity bit with the primary signal. In addition the signal quality can be monitored independently of the bit rate of transmission light signal, resulting in improved flexibility.

The quality information such as BER, wavelength detection, or SNR, which is stored in each repeater, may be transferred to a path terminating element or network management node by using a channel of a different wavelength from that of the primary signal, a radio channel, or subcarrier multiplexed with an optical primary signal.

The present invention can be applied not only to systems of SDH/SONET, packet, frame relay, and ATM but also to message-oriented communication system using commands.

Another multiplexing technique may be used in the signal quality monitoring system according to the present invention. For example, polarized-wave multiplexing, time multiplexing, space multiplexing, and the like may be employed.

Furthermore, a device having an FEC (Forward Error Correction) function also has a 3R (Regeneration, re-shaping, re-timing) function. Therefore, the present invention can be also applied to the case where 3R terminating equipment having the FEC function is used.

Finally, 3R processing can be realized without converting a lightwave signal to an electric signal. For example, an all-optical 3R circuit can be obtained (see "An All-optical signal discriminator: application to 2.4Gb/s all optical regeneration and 20Gb/s demultiplexing," in proc. Of OECC'96, 18B4-3, pp. 342-343, 1996).

Although the above-mentioned embodiments of the present invention have been described herein, it should be apparent to those skilled in the art that this invention may be embodied in many other specific forms without departing from the scope or the invention. Therefore, the present examples and embodiments are to be considered as illustrative and not restrictive and the invention is not to be limited to the details given herein, but may be modified.

## Claims

1. A method for monitoring signal transmission quality in a network composed of a plurality of elements (300) connected by transmission lines, comprising the steps of:
at each of the elements (300),
a) receiving a first transmission signal from a preceding element through a first transmission line connected to the preceding element;
b) detecting signal transmission quality for the first transmission line based on the first transmission signal received from the preceding element;
c) transmitting a second transmission signal to a following element through a second transmission line connected to the following element; and
d) when receiving a request from another element, transmitting the signal transmission quality to the element originating the request,
wherein a transmission signal includes quality check information,
the step (b) comprises the steps of:
b.1) terminating first quality check information included in the first transmission signal received from the preceding element through the first transmission line;
b.2) detecting the signal transmission quality for the first transmission line using the first quality check information and the first transmission signal;
b.3) generating second quality check information from the first transmission signal; and
b.4) replacing the first quality check information with the second quality check information to generate the second transmission signal.

2. The method according to claim 1, wherein the quality check information is obtained by parity bit method.

3. The method according to claim 1, wherein the quality check information is wavelength data indicating a wavelength of an electromagnetic wave used in a corresponding transmission line.

4. The method according to claim 1, wherein the quality check information is a signal-to-noise ratio of a received transmission signal through a corresponding transmission line.

5. The method according to any of claims 1-4, further comprising the step of:
e) switching interconnections between a plurality of input ports and a plurality of output ports depending on a control signal received from another element, each of the input ports connected to a first transmission line and each of the output ports connected to a second transmission line.

6. A method for monitoring signal transmission quality in a path of a network, wherein the path includes a plurality of repeaters (300) which are connected through transmission lines between a first path terminating element (500) and a second path terminating element (600), comprising the steps of:
at the first path terminating element,
a) transmitting a transmission signal including a primary signal, a section quality check signal, and a path quality check signal toward the second path terminating element (600);
at each of the repeaters (300),
b) detecting section quality for a first transmission line connected to a preceding repeater based on a first section quality check signal and a first transmission signal which are received from the preceding element;
c) replacing the first section quality check signal with a second section quality check signal generated from the first transmission signal to produce a second transmission signal to be transmitted to a following element which is one of another repeater and the second path terminating element;
at the second path terminating element,
d) detecting section quality for a transmission line connected to a preceding repeater based on a section quality check signal and a transmission signal which are received from the preceding element;
e) detecting path quality for the path based on a path quality check signal and the transmission signal which are received from the preceding element; and
f) sequentially accessing the repeaters to check section qualities thereof to identify an impaired section, when the path quality is lower than a predetermined threshold.

7. The method according to claim 6, further comprising the steps of:
g) when having identified the impaired section, switching a current path to an alternative path so as to avoid the impaired section.

8. An optical element device suitable for an optical communication network in which a plurality of optical element devices are connected via optical transmission lines, comprising:
an input interface (301) for receiving a first transmission signal from a preceding optical element device through a first optical transmission line connected to the preceding optical element device;
a quality detector (104) for detecting signal transmission quality for the first optical transmission line based on the first transmission signal received from the preceding optical element device;
a memory (308) for storing the signal transmission quality;
an output interface (306) for transmitting a second transmission signal to a following optical element device through a second optical transmission line connected to the following optical element device; and
a controller (307) controlling such that, when receiving a request from another optical element device, the signal transmission quality is read from the memory and is transmitted to the optical element device originating the request,
wherein the quality detector (104) comprises:
a terminator (303) for terminating first quality check information included in the first transmission signal received from the preceding optical element device through the first optical transmission line;
a detector for detecting the signal transmission quality for the first transmission line using the first quality check information and the first transmission signal; and
a quality check information generator (305) for generating second quality check information from the first transmission signal to replace the first quality check information with the second quality check information to generate the second transmission signal.

9. The optical element device according to claim 8, wherein the quality check information is obtained by parity bit method.

10. The optical element device according to claim 8, wherein the quality check information is wavelength data indicating a wavelength of an electromagnetic wave used in a corresponding optical transmission line.

11. The optical element device according to claim 8, wherein the quality check information is a signal-to-noise ratio of a received transmission signal through a corresponding optical transmission line.

12. The optical element device according to any of claims 8-11, further comprising:
a switch (304) for switching interconnections between a plurality of input ports and a plurality of output ports depending on a control signal received from another optical element device, each of the input ports connected to a different first optical transmission line and each of the output ports connected to a different second optical transmission line.

13. A system for monitoring signal transmission quality in a path of a network, wherein the path includes a plurality of repeaters (306) which are connected through transmission lines between a first path terminating element (500) and a second path terminating element (600),
the first path terminating element (500) comprising:
a section quality check generator (502) for generating a section quality check signal;
a path quality check generator (502) for generating a path quality check signal; and
an output interface (503) for transmitting a transmission signal including a primary signal, the section quality check signal, and the path quality check signal toward the second path terminating element,
each of the repeaters (300) comprising:
a quality detector (104) for detecting section quality for a first transmission line connected to a preceding repeater based on a first section quality check signal and a first transmission signal which are received from the preceding element; and
a processor (307) for replacing the first section quality check signal with a second section quality check signal generated from the first transmission signal to produce a second transmission signal to be transmitted to a following element which is one of another repeater and the second path terminating element, and
the second path terminating element (600) comprising:
a section quality detector (603) for detecting section quality for a transmission line connected to a preceding repeater based on a section quality check signal and a transmission signal which are received from the preceding element;
a path quality detector (603) for detecting path quality for the path based on a path quality check signal and the transmission signal which are received from the preceding element; and
a controller (605) for sequentially accessing the repeaters to check section qualities thereof to identify an impaired section, when the path quality is lower than a predetermined threshold.

14. The system according to claim 13, wherein each of the first and second path terminating elements comprises a switch,
wherein when having identified the impaired section, the controller controls the switch to switch a current path to an alternative path so as to avoid the impaired section.

15. The method according to claim 1, wherein the network is wavelength-division multiplexing (WDM) network.

16. The method according to claim 6, wherein the network is wavelength-division multiplexing (WDM) network.

17. The optical element device according to claim 8, wherein the optical communication network is wavelength-division multiplexing (WDM) network.

18. The system according to claim 13, wherein the network is wavelength-division multiplexing (WDM) network.

## Patentansprüche

1. Verfahren zum Überwachen der Signalübertragungsqualität in einem Netz, das aus mehreren Elementen (300) aufgebaut ist, die durch Übertragungsleitungen verbunden sind, das die folgenden Schritte umfasst:
bei jedem der Elemente (300)
a) Empfangen eines ersten Übertragungssignals von einem vorhergehenden Element über eine erste Übertragungsleitung, die mit dem vorhergehenden Element verbunden ist;
b) Erfassen der Signalübertragungsqualität für die erste Übertragungsleitung anhand des von dem vorhergehenden Element empfangenen ersten Übertragungssignals;
c) Übertragen eines zweiten Übertragungssignals an ein folgendes Element über eine mit dem folgenden Element verbundene zweite Übertragungsleitung; und
d) wenn eine Anforderung von einem weiteren Element empfangen wird, Übertragen der Signalübertragungsqualität an jenes Element, von dem die Anforderung ausgeht,
wobei ein Übertragungssignal Qualitätsprüfinformationen enthält,
wobei der Schritt (b) die folgenden Schritte umfasst:
b.1) Beenden erster Qualitätsprüfinformationen, die in dem ersten Übertragungssignal enthalten sind, das von dem vorhergehenden Element über die erste Übertragungsleitung empfangen wird;
b.2) Erfassen der Signalübertragungsqualität für die erste Übertragungsleitung unter Verwendung der ersten Qualitätsprüfinformationen und des ersten Übertragungssignals;
b.3) Erzeugen zweiter Qualitätsprüfinformationen aus dem ersten Übertragungssignal; und
b.4) Ersetzen der ersten Qualitätsprüfinformationen durch die zweiten Qualitätsprüfinformationen, um das zweite Übertragungssignal zu erzeugen.

2. Verfahren nach Anspruch 1, bei dem die Qualitätsprüfinformationen durch ein Paritätsbit-Verfahren erhalten werden.

3. Verfahren nach Anspruch 1, bei dem die Qualitätsprüfinformationen Wellenlängendaten sind, die eine Wellenlänge einer elektromagnetischen Welle angeben, die in einer entsprechenden Übertragungsleitung verwendet wird.

4. Verfahren nach Anspruch 1, bei dem die Qualitätsprüfinformationen ein Rauschabstand eines über eine entsprechende Übertragungsleitung empfangenen Übertragungssignals sind.

5. Verfahren nach einem der Ansprüche 1-4, das ferner die folgenden Schritte umfasst:
e) Umschalten von Zwischenverbindungen zwischen mehreren Eingangsanschlüssen und mehreren Ausgangsanschlüssen in Abhängigkeit von einem von einem weiteren Element empfangenen Steuersignal, wobei jeder der Eingangsanschlüsse mit einer ersten Übertragungsleitung verbunden ist und jeder der Ausgangsanschlüsse mit einer zweiten Übertragungsleitung verbunden ist.

6. Verfahren zum Überwachen der Signalübertragungsqualität in einem Pfad eines Netzes, wobei der Pfad mehrere Verstärker (300) enthält, die über Übertragungsleitungen zwischen ein erstes Pfadabschlusselement (500) und ein zweites Pfadabschlusselement (600) geschaltet sind, das die folgenden Schritte umfasst:
bei dem ersten Pfadabschlusselement
a) Übertragen eines Übertragungssignals, das ein Primärsignal, ein Abschnittsqualitäts-Prüfsignal und ein Pfadqualitäts-Prüfsignal enthält, an das zweite Pfadabschlusselement (600);
bei jedem der Verstärker (300)
b) Erfassen der Abschnittsqualität für eine erste Übertragungsleitung, die mit einem vorhergehenden Verstärker verbunden ist, anhand eines ersten Abschnittqualitäts-Prüfsignals und eines ersten Übertragungssignals, die von dem vorhergehenden Element empfangen werden;
c) Ersetzen des ersten Abschnittsqualitäts-Prüfsignals durch ein zweites Abschnittsqualitäts-Prüfsignal, das aus dem ersten Übertragungssignal erzeugt wird, um ein zweites Übertragungssignal zu erzeugen, das an ein folgendes Element übertragen werden soll, das entweder ein weiterer Verstärker oder das zweite Pfadabschlusselement ist;
bei dem zweiten Pfadabschlusselement
d) Erfassen der Abschnittsqualität für eine Übertragungsleitung, die mit einem vorhergehenden Verstärker verbunden ist, anhand eines Abschnittsqualitäts-Prüfsignals und eines Übertragungssignals, die von dem vorhergehenden Element empfangen werden;
e) Erfassen der Pfadqualität für den Pfad anhand eines Pfadqualitäts-Prüfsignals und des Übertragungssignals, die von dem vorhergehenden Element empfangen werden; und
f) sequentielles Zugreifen auf die Verstärker, um Abschnittsqualitäten hiervon zu prüfen, um einen beeinträchtigten Abschnitt zu identifizieren, wenn die Pfadqualität niedriger als ein vorgegebener Schwellenwert ist.

7. Verfahren nach Anspruch 6, das ferner die folgenden Schritte umfasst:
g) wenn der beeinträchtigte Abschnitt identifiziert worden ist, Umschalten eines momentanen Pfades zu einem alternativen Pfad, um den beeinträchtigen Abschnitt zu meiden.

8. Vorrichtung mit optischem Element, die für ein optisches Kommunikationsnetz geeignet ist, in der mehrere Vorrichtungen mit optischem Element über optische Übertragungsleitungen miteinander verbunden sind, die umfasst:
eine Eingangsschnittstelle (301) zum Empfangen eines ersten Übertragungssignals von einer vorhergehenden Vorrichtung mit optischem Element über eine erste optische Übertragungsleitung, die mit der vorhergehenden Vorrichtung mit optischem Element verbunden ist;
einen Qualitätsdetektor (104) zum Erfassen der Signalübertragungsqualität für die erste optische Übertragungsleitung anhand des ersten Übertragungssignals, das von der vorhergehenden Vorrichtung mit optischem Element empfangen wird;
einen Speicher (308) zum Speichern der Signalübertragungsqualität;
eine Ausgangsschnittstelle (306) zum Übertragen eines zweiten Übertragungssignals zu einer folgenden Vorrichtung mit optischem Element über eine zweite optische Übertragungsleitung, die mit der folgenden Vorrichtung mit optischem Element verbunden ist; und
eine Steuereinheit (307), die in der Weise steuert, dass dann, wenn eine Anforderung von einer weiteren Vorrichtung mit optischem Element empfangen wird, die Signalübertragungsqualität aus dem Speicher gelesen wird und an die Vorrichtung mit optischem Element, von der die Anforderung ausging, übertragen wird,
wobei der Qualitätsdetektor (104) umfasst:
ein Beendigungselement (303) zum Beenden erster Qualitätsprüfinformationen, die in dem ersten Übertragungssignal enthalten sind, das von der vorhergehenden Vorrichtung mit optischem Element über die erste optische Übertragungsleitung empfangen wird;
einen Detektor zum Erfassen der Signalübertragungsqualität für die erste Übertragungsleitung unter Verwendung der ersten Qualitätsprüfinformationen und des ersten Übertragungssignals; und
einen Qualitätsprüfinformation-Generator (305) zum Erzeugen zweiter Qualitätsprüfinformationen aus dem ersten Übertragungssignal, um die ersten Qualitätsprüfinformationen durch die zweiten Qualitätsprüfinformationen zu ersetzen, um das zweite Übertragungssignal zu erzeugen.

9. Vorrichtung mit optischem Element nach Anspruch 8, bei der die Qualitätsprüfinformationen durch ein Paritätsbit-Verfahren erhalten werden.

10. Vorrichtung mit optischem Element nach Anspruch 8, bei der die Qualitätsprüfinformationen Wellenlängendaten sind, die eine Wellenlänge einer elektromagnetischen Welle angeben, die in einer entsprechenden optischen Übertragungsleitung verwendet wird.

11. Vorrichtung mit optischem Element nach Anspruch 8, bei der die Qualitätsprüfinformationen ein Rauschabstand eines über eine entsprechende optische Übertragungsleitung empfangenen Übertragungssignals sind.

12. Vorrichtung mit optischem Element nach einem der Ansprüche 8-11, die ferner umfasst:
einen Schalter (304) zum Umschalten von Zwischenverbindungen zwischen mehreren Eingangsanschlüssen und mehreren Ausgangsanschlüssen in Abhängigkeit von einem von einer weiteren Vorrichtung mit optischem Element empfangenen Steuersignal, wobei jeder der Eingangsanschlüsse mit einer anderen ersten optischen Übertragungsleitung verbunden ist und jeder der Ausgangsanschlüsse mit einer anderen zweiten optischen Übertragungsleitung verbunden ist.

13. System zum Überwachen der Signalübertragungsqualität in einem Pfad eines Netzes, wobei der Pfad mehrere Verstärker (300) enthält, die über Übertragungsleitungen zwischen ein erstes Pfadabschlusselement (500) und ein zweites Pfadabschlusselement (600) geschaltet sind,
wobei das erste Pfadabschlusselement (500) umfasst:
einen Abschnittsqualitäts-Prüfgenerator (502) zum Erzeugen eines Abschnittsqualitäts-Prüfsignals;
einen Pfadqualitäts-Prüfgenerator (502) zum Erzeugen eines Pfadqualitäts-Prüfsignals; und
eine Ausgangsschnittstelle (503) zum Übertragen eines Übertragungssignals, das ein Primärsignal, das Abschnittsqualitäts-Prüfsignal und das Pfadqualitäts-Prüfsignal enthält, an das zweite Pfadabschlusselement,
wobei jeder der Verstärker (300) umfasst:
einen Qualitätsdetektor (104) zum Erfassen der Abschnittsqualität für eine erste Übertragungsleitung, die mit einem vorhergehenden Verstärker verbunden ist, anhand eines ersten Abschnittsqualitäts-Prüfsignals und eines ersten Übertragungssignals, die von dem vorhergehenden Element empfangen werden; und
einen Prozessor (307) zum Ersetzen des ersten Abschnittsqualitäts-Prüfsignals durch ein zweites Abschnittsqualitäts-Prüfsignal, das aus dem ersten Übertragungssignal erzeugt wird, um ein zweites Übertragungssignal zu erzeugen, das zu einem folgenden Element übertragen werden soll, das entweder ein weiterer Verstärker oder das zweite Pfadabschlusselement ist, und
wobei das zweite Pfadabschlusselement (600) umfasst:
einen Abschnittsqualitäts-Detektor (603) zum Erfassen der Abschnittsqualität für eine Übertragungsleitung, die mit einem vorhergehenden Verstärker verbunden ist, anhand eines Abschnittsqualitäts-Prüfsignals und eines Übertragungssignals, die von dem vorhergehenden Element empfangen werden;
einen Pfadqualitäts-Detektor (603) zum Erfassen der Pfadqualität für den Pfad anhand eines Pfadqualitäts-Prüfsignals und des Übertragungssignals, die von dem vorhergehenden Element empfangen werden; und
eine Steuereinheit (605) zum sequentiellen Zugreifen auf die Verstärker, um Abschnittsqualitäten hiervon zu prüfen, um einen beeinträchtigten Abschnitt zu identifizieren, wenn die Pfadqualität niedriger als ein vorgegebener Schwellenwert ist.

14. System nach Anspruch 13, bei dem jedes der ersten und zweiten Pfadabschlusselemente einen Schalter umfasst,
wobei die Steuereinheit dann, wenn der beeinträchtigte Abschnitt identifiziert worden ist, den Schalter so steuert, dass er einen momentanen Pfad zu einem alternativen Pfad umschaltet, um den beeinträchtigten Abschnitt zu meiden.

15. Verfahren nach Anspruch 1, bei dem das Netz ein Netz mit Wellenlängenteilungs-Multiplexierung (WDM-Netz) ist.

16. Verfahren nach Anspruch 6, bei dem das Netz ein Netz mit Wellenlängenteilungs-Multiplexierung (WDM-Netz) ist.

17. Vorrichtung mit optischem Element nach Anspruch 8, bei der das optische Kommunikationsnetz ein Netz mit Wellenlängenteilungs-Multiplexierung (WDM-Netz) ist.

18. System nach Anspruch 13, bei dem das Netz ein Netz mit Wellenlängenteilungs-Multiplexierung (WDM-Netz) ist.

## Revendications

1. Procédé de contrôle de la qualité de transmission d'un signal dans un réseau composé d'une pluralité d'éléments (300) reliés par des lignes de transmission, comprenant les étapes consistant à :
au niveau de chacun des éléments (300),
a) recevoir un premier signal de transmission de la part d'un élément précédent, par le biais d'une première ligne de transmission reliée à l'élément précédent ;
b) détecter la qualité de transmission du signal pour la première ligne de transmission, sur la base du premier signal de transmission reçu de la part de l'élément précédent ;
c) transmettre un second signal de transmission à un élément suivant, par le biais d'une seconde ligne de transmission reliée à l'élément suivant ; et
d) lors de la réception d'une requête de la part d'un autre élément, transmettre la qualité de transmission du signal à l'élément à l'origine de la requête,
dans lequel un signal de transmission comprend des informations de contrôle de la qualité,
l'étape b) comprend les étapes consistant à :
b.1) mettre fin aux premières informations de contrôle de la qualité incluses dans le premier signal de transmission reçu de la part de l'élément précédent par le biais de la première ligne de transmission ;
b.2) détecter la qualité de transmission du signal pour la première ligne de transmission en utilisant les premières informations de contrôle de la qualité et le premier signal de transmission ;
b.3) générer des secondes informations de contrôle de la qualité à partir du premier signal de transmission ; et
b.4) remplacer les premières informations de contrôle de la qualité par les secondes informations de contrôle de la qualité afin de générer le second signal de transmission.

2. Procédé selon la revendication 1, dans lequel les informations de contrôle de la qualité sont obtenues par un procédé de bit de parité.

3. Procédé selon la revendication 1, dans lequel les informations de contrôle de la qualité sont des données de longueur d'onde indiquant une longueur d'onde d'une onde électromagnétique utilisée sur une ligne de transmission correspondante.

4. Procédé selon la revendication 1, dans lequel les informations de contrôle de la qualité sont un rapport signal/bruit d'un signal de transmission reçu par le biais d'une ligne de transmission correspondante.

5. Procédé selon l'une quelconque des revendications 1 à 4, comprenant en outre l'étape consistant à :
e) commuter des interconnexions entre une pluralité de ports d'entrée et une pluralité de ports de sortie, en fonction d'un signal de commande reçu de la part d'un autre élément, chacun des ports d'entrée étant relié à une première ligne de transmission et chacun des ports de sortie étant relié à une seconde ligne de transmission.

6. Procédé de contrôle de la qualité de transmission d'un signal sur un trajet d'un réseau, dans lequel le trajet comprend une pluralité de répétiteurs (300) qui sont reliés par des lignes de transmission entre un premier élément de terminaison de trajet (500) et un second élément de terminaison de trajet (600), comprenant les étapes consistant à :
au niveau du premier élément de terminaison de trajet,
a) transmettre un signal de transmission comprenant un signal primaire, un signal de contrôle de qualité de section, et un signal de contrôle de qualité de trajet vers le second élément de terminaison de trajet (600) ;
au niveau de chacun des répétiteurs (300),
b) détecter la qualité de section d'une première ligne de transmission reliée à un répétiteur précédent, sur la base d'un premier signal de contrôle de qualité de section et d'un premier signal de transmission qui sont reçus de la part de l'élément précédent ;
c) remplacer le premier signal de contrôle de qualité de section par un second signal de contrôle de qualité de section généré à partir du premier signal de transmission afin de produire un second signal de transmission devant être transmis à un élément suivant qui est l'un d'un autre répétiteur et du second élément de terminaison de trajet ;
au niveau du second élément de terminaison de trajet,
d) détecter une qualité de section pour une ligne de transmission reliée à un répétiteur précédent, sur la base d'un signal de contrôle de qualité de section et d'un signal de transmission qui sont reçus de la part de l'élément précédent ;
e) détecter une qualité de trajet du trajet sur la base d'un signal de contrôle de qualité de trajet et du signal de transmission qui sont reçus de la part de l'élément précédent ; et
f) accéder séquentiellement aux répétiteurs afin de contrôler les qualités de section de ceux-ci de façon à identifier une section défaillante, lorsque la qualité du trajet est inférieure à un seuil prédéterminé.

7. Procédé selon la revendication 6, comprenant en outre les étapes consistant à :
g) une fois que la section défaillante a été identifiée, commuter un trajet actuel vers un trajet alternatif de façon à éviter la section défaillante.

8. Dispositif à élément optique convenant pour un réseau de communication optique dans lequel plusieurs dispositifs à éléments optiques sont reliés via des lignes de transmission optiques, comprenant :
une interface d'entrée (301) destinée à recevoir un premier signal de transmission de la part d'un dispositif à élément optique précédent, par le biais d'une première ligne de transmission optique reliée au dispositif à élément optique précédent ;
un détecteur de qualité (104) destiné à détecter une qualité de transmission de signal de la première ligne de transmission optique, sur la base du premier signal de transmission reçu de la part du dispositif à élément optique précédent ;
une mémoire (308) destinée à stocker la qualité de transmission du signal ;
une interface de sortie (306) destinée à transmettre un second signal de transmission à un dispositif à élément optique suivant, par le biais d'une seconde ligne de transmission optique reliée au dispositif à élément optique suivant ; et
un contrôleur (307) effectuant un contrôle de telle sorte que, lors de la réception d'une requête de la part d'un autre dispositif à élément optique, la qualité de transmission du signal soit lue de la mémoire et soit transmise au dispositif à élément optique à l'origine de la requête,
dans lequel le détecteur de qualité (104) comprend :
un dispositif de terminaison (303) destiné à mettre fin aux premières informations de contrôle de qualité incluses dans le premier signal de transmission reçu de la part du dispositif à élément optique précédent par le biais de la première ligne de transmission optique ;
un détecteur destiné à détecter la qualité de transmission du signal de la première ligne de transmission en utilisant les premières informations de contrôle de qualité et le premier signal de transmission ; et
un générateur d'informations de contrôle de qualité (305) destiné à générer des secondes informations de contrôle de qualité à partir du premier signal de transmission afin de remplacer les premières informations de contrôle de qualité par les secondes informations de contrôle de qualité de façon à générer le second signal de transmission.

9. Dispositif à élément optique selon la revendication 8, dans lequel les informations de contrôle de qualité sont obtenues par un procédé de bit de parité.

10. Dispositif à élément optique selon la revendication 8, dans lequel les informations de contrôle de qualité sont des données de longueur d'onde indiquant une longueur d'onde d'une onde électromagnétique utilisée dans une ligne de transmission optique correspondante.

11. Dispositif à élément optique selon la revendication 8, dans lequel les informations de contrôle de qualité sont un rapport signal/bruit d'un signal de transmission reçu par le biais d'une ligne de transmission otique correspondante.

12. Dispositif à élément optique selon l'une quelconque des revendications 8 à 11, comprenant en outre :
un commutateur (304) destiné à commuter des interconnexions entre une pluralité de ports d'entrée et une pluralité de ports de sortie en fonction d'un signal de commande reçu de la part d'un autre dispositif à élément optique, chacun des ports d'entrée étant relié à une première ligne de transmission optique différente et chacun des ports de sortie étant relié à une seconde ligne de transmission optique différente.

13. Système de contrôle de la qualité de transmission d'un signal sur un trajet d'un réseau, dans lequel le trajet comprend une pluralité de répétiteurs (300) qui sont reliés par des lignes de transmission entre un premier élément de terminaison de trajet (500) et un second élément de terminaison de trajet (600),
le premier élément de terminaison de trajet (500) comprenant :
un générateur de contrôle de qualité de section (502) destiné à générer un signal de contrôle de qualité de section ;
un générateur de contrôle de qualité de trajet (502) destiné à générer un signal de contrôle de qualité de trajet ; et
une interface de sortie (503) destinée à transmettre un signal de transmission comprenant un signal primaire, le signal de contrôle de qualité de section, et le signal de contrôle de qualité de trajet vers le second élément de terminaison de trajet,
chacun des répétiteurs (300) comprenant :
un détecteur de qualité (104) destiné à détecter une qualité de section d'une première ligne de transmission reliée à un répétiteur précédent sur la base d'un premier signal de contrôle de qualité de section et d'un premier signal de transmission qui sont reçus de la part de l'élément précédent ; et
un processeur (307) destiné à remplacer le premier signal de contrôle de qualité de section par un second signal de contrôle de qualité de section généré à partir du premier signal de transmission afin de produire un second signal de transmission devant être transmis à un élément suivant qui est l'un d'un autre répétiteur et du second élément de terminaison de trajet, et
le second élément de terminaison de trajet (600) comprenant :
un détecteur de qualité de section (603) destiné à détecter une qualité de section d'une ligne de transmission reliée à un répétiteur précédent sur la base d'un signal de contrôle de qualité de section et d'un signal de transmission qui sont reçus de la art de l'élément précédent ;
un détecteur de qualité de trajet (603) destiné à détecter une qualité de trajet du trajet sur la base d'un signal de contrôle de qualité de trajet et du signal de transmission qui sont reçus de la part de l'élément précédent ; et
un contrôleur (605) destiné à accéder séquentiellement aux répétiteurs afin de contrôler les qualités de section de ceux-ci de façon à identifier une section défaillante, lorsque la qualité de trajet est inférieure à un seuil prédéterminé.

14. Système selon la revendication 13, dans lequel chacun des premier et second éléments de terminaison de trajet comprend un commutateur,
dans lequel, une fois que la section défaillante a été identifiée, le contrôleur contrôle le commutateur afin de commuter un trajet actuel vers un trajet alternatif de façon à éviter la section défaillante.

15. Procédé selon la revendication 1, dans lequel le réseau est un réseau à multiplexage par répartition en longueur d'onde (WDM).

16. Procédé selon la revendication 6, dans lequel le réseau est un réseau à multiplexage par répartition en longueur d'onde (WDM).

17. Dispositif à élément optique selon la revendication 8, dans lequel le réseau de communication optique est un réseau à multiplexage par répartition en longueur d'onde (WDM).

18. Système selon la revendication 13, dans lequel le réseau est un réseau à multiplexage par répartition en longueur d'onde (WDM).
